# EUROPEAN PATENT SPECIFICATION

(11) **EP 3 778 342 B1**
(45) Date of publication and mention of the grant of the patent: **08.11.2023**
(21) Application number: 18914523.8
(22) Date of filing: 20.09.2018
(51) Int. Cl.: B61F 7/00, B60B 35/10, B60B 17/00

(54) **GAUGE-CHANGEABLE WHEELSET**
RADSATZ MIT VERÄNDERLICHER SPURWEITE
ESSIEU MONTÉ À ÉCARTEMENT VARIABLE

(30) Priority: 13.04.2018 CN 201810333761
(43) Date of publication of application: 17.02.2021
(73) Proprietor: CRRC QINGDAO SIFANG CO., LTD., Chengyang District Qingdao Shandong 266111 (CN)
(72) Inventor: WANG, Xu, Qingdao, Shandong 266111 (CN); QIAO, Qingfeng, Qingdao, Shandong 266111 (CN); ZHOU, Pingyu, Qingdao, Shandong 266111 (CN); WEI, Jiaqi, Qingdao, Shandong 266111 (CN); KUAI, Rongsheng, Qingdao, Shandong 266111 (CN)
(74) Representative: Dilg, Haeusler, Schindelmann Patentanwaltsgesellschaft mbH
(86) International application number: PCT/CN2018/106593
(87) International publication number: WO 2019/196340

(56) References cited:
- CN-A- 1 232 105
- CN-A- 107 521 519
- CN-A- 107 697 094
- CN-A- 107 757 650
- CN-A- 107 757 652
- CN-A- 107 757 652
- CN-A- 107 757 652
- CN-A- 107 757 652
- CN-A- 107 757 653
- DE-A1-102016 011 737
- JP-A- 2001 018 796

## Description

### CROSS-REFERENCE TO RELATED APPLICATION

The present application claims priority to Chinese Application No. 2018103337617 filed on April 13, 2018, entitled "Gauge-changing Wheelset".

### FIELD OF TECHNOLOGY

The present invention relates to the technical field of rail vehicle gauge change, in particular to a gauge-changing wheelset.

### BACKGROUND

At present, in order to meet the transportation requirements between rails with different gauges in neighboring countries, bogies with different distances between backs of wheel flanges are generally replaced at the border with other countries, and thus this solution is costly and time-consuming. Hence, gauge-changing bogies have been invented in Spain and then in Japan to enable continuous running of trains on rails with different gauges.

A form of independent wheelsets is adopted in the gauge-changing bogie in Spain, which has a complicated structure since an additional guide structure is required. As for the gauge-changing bogie in Japan, a sliding mechanism is disposed on an interior side of the wheel and an outer sleeve is additionally disposed outside the axle, which is equivalent to increasing the diameter of the axle, thereby not only limiting the design space of the motor and gearbox, but also bringing up higher requirements on the gearbox bearings, accompanied by increased costs and reduced service life. CN107757652A discloses a non-powered wheelset axle -box device used in a high-speed multiple unit train capable of providing a change between standard gauge and wide gauge, which includes a locking mechanism arranged between a sliding mechanism and an axle-box assembly. The locking mechanism includes a locking rod, work arms, nodes, drive arms, linkages, springs, a lower stopper and an upper stopper. DE102016011737A1 relates to a rail axle assembly that finds application in the railway industry and is used for the purpose of adjustment of the rail-bound vehicle for its transit along rail tracks with different gauges. The rail axle assembly includes a locking device that allows locking the displacement in the lateral direction of the corresponding wheel with respect to the platform and the locking device for the respective wheel has at least two independent safety gears or vertically displaceable bars, the respective safety gear being displaceable within a locking guide which is integral with the platform without the possibility of leaving the locking guide. CN107697094A discloses sliding device for wheels capable of providing a change between standard gauge and wide gauge in which a sliding bushing 7 is mounted on and connected with the wheels.

### SUMMARY

### (I) Technical problems to be solved

The present invention aims to solve at least one of the technical problems in the prior art or related technologies.

One of the embodiments of the present invention to provide a gauge-changing wheelset which is simple in structure, small in change of current vehicle structures, and facilitates mass modification of the existing vehicles to improve the versatility and reliability of the gauge-changing wheelset.

### (II) Technical solutions

In order to solve the technical problems above, the present invention provides a gauge-changing wheelset, comprising wheels, an axle, and locking mechanisms; the wheels are respectively provided at both ends of the axle, and are connected to the axle through splines; the locking mechanisms are respectively provided on exterior sides of the wheels and located in an axle-box body at both ends of the axle; the locking mechanisms are connected to the wheels for locking and unlocking the wheels, so as to change gauges of the wheels.

According to the invention, the locking mechanism comprises an outer sleeve and locking pins; opposite sides outside the outer sleeve are provided with bosses axially extending along the outer sleeve, and a plurality of flutes are disposed at intervals along the length direction of the bosses; the outer sleeve is in clearance fit with an inner surface of the axle-box body, and an inner wall of the axle-box body is provided with concave arc surfaces corresponding to the flutes respectively; the locking pins are inserted into locking spaces defined by the flutes and the concave arc surfaces, and can be switched between a plurality of the locking spaces under the action of an external force, so as to change gauges of the wheels.

In an embodiment of the present invention, the locking mechanism further comprises an inner sleeve and a rolling bearing; the inner sleeve, the rolling bearing, and the outer sleeve are tightly sleeved in sequence from inside to outside, the inner sleeve is in clearance fit with the axle, and an end of the inner sleeve facing the wheel extends beyond the axle-box body and is firmly connected with the wheel.

In an embodiment of the present invention, the axle is configured as a stepped shaft having a diameter in the middle part greater than a diameter at both ends, the wheels are disposed on an intermediate section of the stepped shaft and are respectively arranged at both ends of the intermediate section, and the locking mechanisms are arranged on both ends of the stepped shaft.

In an embodiment of the present invention, an inner circumference of the wheel is provided with internal splines, both ends of the intermediate section of the stepped shaft are provided with external splines, the wheels and both ends of the intermediate section are in fit connection through the internal splines and the external splines, and both ends of each said external spline are configured as positioning protrusions.

In an embodiment of the present invention, both ends of the intermediate section are configured as a three-stage stepped shaft including a first flange, a second flange, and a third flange of which the diameters are gradually increased from outside to inside, and the external splines are provided on an external circumference of the second flange. A center hole of the wheel is configured as a three-stage stepped hole including a first connecting hole, a second connecting hole, and a third connecting hole of which the diameters are gradually increased from outside to inside. The internal splines are circumferentially disposed on an inner wall of the second connecting hole, the first connecting hole matches the first flange, the internal splines are in fit connection with the external splines, and the third connecting hole matches the third flange.

In an embodiment of the present invention, the inner sleeve is sleeved on both ends of the stepped shaft, and a gauge change interval is reserved between the inner sleeve and a shaft shoulder of the stepped shaft; and the distance between two adjacent flutes is equal to half of the gauge to be changed.

In an embodiment of the present invention, an end of the inner sleeve connected with the wheels is configured as an externally enlarged stepped hole, the inner diameter of a wide section of the stepped hole is adapted to the outer diameter of the intermediate section of the stepped shaft, and the inner diameter of a narrow section of the stepped hole is adapted to the inner diameter of both ends of the stepped shaft.

In an embodiment of the present invention, both ends of the axle are respectively connected to the axle-box bodies through positioning bearings; an interior side of the wheel and the axle are connected with a soft seal.

In an embodiment of the present invention, an interior side of the axle-box body is opened, and an exterior side thereof is provided with a detachable outer end cover; the outer end cover and the axle are connected by the positioning bearing.

According to the the present invention, each locking pin includes a pin body one side of which is provided with an open groove penetrating along the radial direction of the pin body; the open groove is provided with at least one lug extending axially along the pin body, an upper end of the lug is connected with a groove top of the open groove, a notch is reserved between a lower end of the lug and a groove bottom of the open groove, and the lug is inserted into the flute.

In an embodiment of the present invention, the concave arc surface matches an outer surface on the opposite side of the pin body having the open groove.

In an embodiment of the present invention, a bottom surface of the pin body is respectively provided as an upward-sloping guide slant on both sides of the central axis.

In an embodiment of the present invention, the pin body is mounted in the axle-box body through a return spring; an upper end of the pin body is connected with the return spring, and a lower end of the pin body extends beyond a bottom surface of the axle-box body.

In an embodiment of the present invention, two parallel lugs extending axially along the pin body are provided in the open groove.

### (III) Beneficial effects

Compared with the prior art, the present invention has at least the following advantages:

The embodiments of the present invention provides a gauge-changing wheelset, in which the locking mechanisms are respectively provided on the exterior sides of the wheels, and a part of the axle between the inner sides of the wheels is consistent with the traditional axle; thus, on the one hand, there is enough space left for the motor, gearbox and other components mounted on the axle between the inner sides of the wheels, and on the other hand, the interface of the gauge-changing wheelset can be consistent with that of existing vehicles, which is convenient for batch modification of the existing vehicles. In addition, the wheels and the axle are connected through splines, thereby the torque is evenly distributed on the inner circumferences of the wheels, which facilitates not only the transmission of torque, but also the sliding of the wheels along the axle to change the gauge.

Moreover, each of the two ends of the intermediate section of the axle is configured as a three-stage stepped shaft, the external splines are disposed at the intermediate section of the three-stage stepped shaft, the center hole of the wheel is further configured as a three-stage stepped hole, and the internal splines are disposed at the intermediate section of the three-stage stepped hole and thus the fit connection of flange plus spline plus flange is formed as a whole; the flanges at both ends of the external splines are adopted to carry the radial load, and the torque is transmitted in combination with the internal and external splines to functionally separate radial load from torque transmission, thereby improving the structural reliability of the gauge-changing wheelset.

Further, by disposing two parallel lugs extending axially along the pin body in the open groove, the forces on individual lugs are reduced, and thus the reliability is enhanced.

### BRIEF DESCRIPTION OF THE DRAWINGS

FIG. 1 is an axial sectional diagram of the gauge-changing wheelset according to an embodiment of the present invention;
FIG. 2 is a three-dimensional schematic diagram of the outer sleeve of the gauge-changing wheelset according to an embodiment of the present invention;
FIG. 3 is a three-dimensional schematic diagram of the locking pin of the gauge-changing wheelset according to an embodiment of the present invention;

### reference numerals:

| | | | |
|---|---|---|---|
| 1 | outer sleeve | 11 | boss |
| 12 | flute | 2 | locking pin |
| 21 | pin body | 22 | open groove |
| 23 | lug | 24 | notch |
| 25 | guide slant | 3 | rolling bearing |
| 4 | inner sleeve | 5 | return spring |
| 6 | wheel | 7 | axle |
| 71 | first flange | 72 | second flange |
| 73 | third flange | | |

### DETAILED DESCRIPTION

Specific embodiments of the present invention will be described in further detail below in conjunction with the drawings and embodiments. The following examples are used to illustrate the present invention, rather than to limit the scope of the present invention.

With respect to the description of the present invention, it should be noted that the orientation or positional relationship indicated by the terms such as "center", "longitudinal", "lateral", "upper", "lower", "front", "back", "left", "right", "vertical", "horizontal", "top", "bottom", "inner", "outer" is based on the orientation or positional relationship shown in the drawings, the purpose of which is only to facilitate describing the present invention and simplify the description, rather than to indicate or imply that the device or element referred to must have a specific orientation, be constructed and operated in a specific orientation, and therefore cannot be construed as a limitation of the present invention.

In the description of the present invention, it should be noted that, unless otherwise clearly specified or defined, the terms "install", "connected with" and "connect to" should be understood in a broad sense, for example, it can be a fixed connection or a detachable connection, or an integral connection; it can be mechanically or electrically connected, directly connected or indirectly connected through an intermediary. For those of ordinary skill in the art, the specific meaning of the above terms in the present invention can be understood according to the specific situations.

In addition, in the description of the present invention, unless otherwise specified, "a plurality of', "multiple", and "multiple sets" mean two or more.

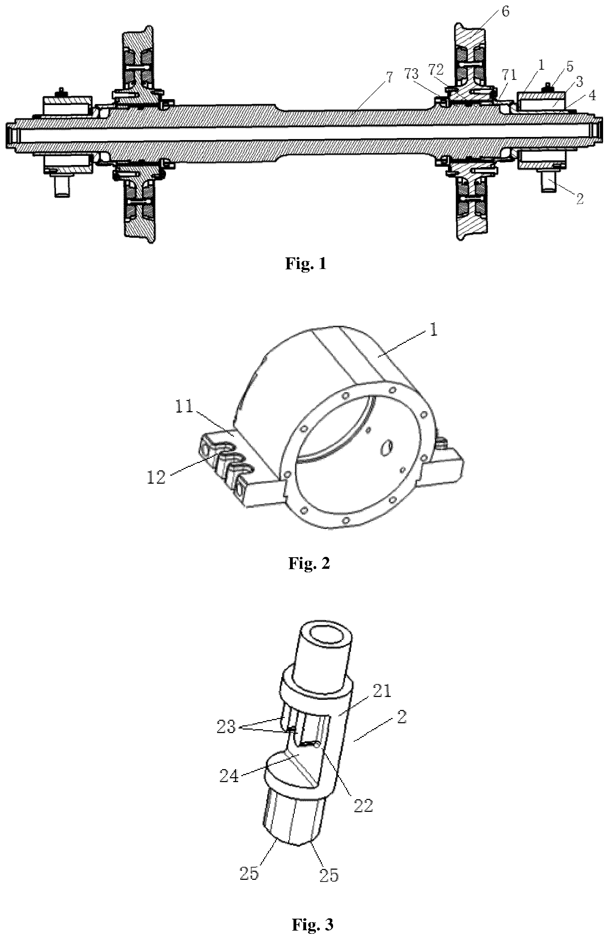

Figs. 1-3 show a gauge-changing wheelset provided by embodiments of the present invention, comprising wheels 6, an axle 7, and locking mechanisms; the wheels 6 are respectively provided at both ends of the axle 7, and are connected to the axle 7 through splines. Specifically, an inner circumference of the wheel 6 is provided with internal splines, the axle 7 is provided with external splines, and the wheel 6 and the axle 7 are in fit connection with the internal splines and external splines to evenly distribute the torque on the inner circumference of the wheel 6, which not only facilitates torque transmission, but also facilitates the sliding of the wheels 6 along the axle 7 to change gauges. The locking mechanisms are respectively provided on exterior sides of the wheels 6 and located in axle-box bodies at both ends of the axle 7, thus, only a small amount of improvement is needed on the part of the axle 7 outside the wheels 6, while the part of axle 7 between the inner sides of the wheels 6 is consistent with the traditional axle; thus, on the one hand, there is enough space left for the motor, gearbox and other components mounted on the axle 7 between the inner sides of the wheels 6, and on the other hand, the interface can be consistent with that of existing vehicles, which is convenient for mass modification of existing vehicles. The locking mechanisms are connected to the wheels 6 for locking and unlocking the wheels 6, so as to change gauges of the wheels 6 and it is simple in structure and convenient to operate.

Specifically, the locking mechanism comprises an inner sleeve 4, a rolling bearing 3, an outer sleeve 1 and locking pins 2; the inner sleeve 4, the rolling bearing 3 and the outer sleeve 1 are tightly sleeved in sequence from inside to outside to form a sliding entirety; and seals are adopted at both ends of the sliding entirety to prevent oil leakage in the rolling bearing 3 and prevent external dust and debris from entering the sliding entirety. When the train runs normally, the inner sleeve 4 and the inner ring of the rolling bearing 3 rotate together with the wheels 6, and the outer ring of the rolling bearing 3 and the outer sleeve 1 remain relatively fixed; the inner sleeve 4 is in clearance fit with the axle 7, and one end of the inner sleeve 4 facing the wheel 6 extends beyond the axle-box body and is fastened to the wheel 6 through fasteners such as bolts, the outer sleeve 1 is in clearance fit with the rolling bearing 3 and check rings are provided at both ends of the outer sleeve 1 to fix the relative position of the outer sleeve 1 and the rolling bearing 3; the outer sleeve 1 is in clearance fit with the inner surface of the axle-box body, and the sliding entirety can slide horizontally relative to the axle-box body. As shown in FIG. 2, opposite sides outside the outer sleeve 1 are provided with bosses 11 axially extending along the outer sleeve 1, preferably the bosses 11 are disposed horizontally, and a plurality of flutes 12 are disposed at intervals along the length direction of the bosses 11. An inner wall of the axle-box body is provided with concave arc surfaces (not shown in the figure) corresponding to the flutes 12 respectively. The locking pins 2 are inserted into locking spaces defined by the flutes 12 and the concave arc surfaces, and can be switched between a plurality of the locking spaces under the action of an external force, so as to change gauges of the wheels 6. Specifically, when the locking pin 2 is inserted into the locking space, a part of the locking pin 2 is located in the flute 12, and the other part fits the concave arc surface, and the outer sleeve 1 is fixed in position relative to the axle-box body to lock, at this time, the position of the wheel 6 relative to the axle 7 is fixed; when the gauge needs to be changed, the locking pin 2 disengages from the locking space under the action of an external force to unlock. In the present embodiment, it is preferable to use an upward thrust to make the locking pins 2 released from the locking space; and then, the wheels 6 are pushed to move outward or inward along the axle 7, and then the sliding entirety is driven to move relative to the axle-box body and the locking pin 2. When the locking space corresponding to the changed gauge moves to just below the locking pin 2, the locking pins 2 are inserted into the locking space under the action of its own gravity and downward force, then the gauge of wheel 6 is changed complexly.

In an embodiment of the present invention, in order to conveniently install and position the locking mechanisms, the axle 7 is configured as a stepped shaft having a diameter in the middle part greater than a diameter at both ends. The wheels 6 are disposed on an intermediate section of the stepped shaft and are respectively arranged at both ends of the intermediate section; and the locking mechanisms are arranged on both ends of the stepped shaft. Specifically, the inner sleeve 4 is sleeved on both ends of the stepped shaft, with the two being in clearance fit. A gauge change interval is reserved between the inner sleeve 4 and the shoulder of the stepped shaft, so as to ensure that enough spacing can be provided for the inner sleeve 4 to move along the axle 7 without interfering with the axle 7 when the gauge is changed. The distance between two adjacent flutes 12 is equal to half of the gauge to be changed. When the gauge is changed, the wheels 6 at both ends of the axle 7 move simultaneously. The two wheels 6 each move half the distance of the gauge to be changed, then the total movement distance is the distance of the gauge to be changed. For instance, the gauge change can be a change from a standard gauge to a narrow gauge or a wide gauge, or from a narrow gauge or a wide gauge to a standard gauge. The gauge can be selected according to specific needs.

Further, both ends of the intermediate section of the stepped shaft are provided with external splines. The wheels 6 and both ends of the intermediate section are in fit connection through the internal splines and the external splines. Further, both ends of the intermediate section are configured as a three-stage stepped shaft including a first flange 71, a second flange 72, and a third flange 73 of which the diameters are gradually increased from outside to inside, and the external splines are provided on an external circumference of the second flange 72. A center hole of the wheel is configured as a three-stage stepped hole including a first connecting hole, a second connecting hole, and a third connecting hole of which the diameters are gradually increases from outside to inside. The internal splines are circumferentially disposed on an inner wall of the second connecting hole. The first connecting hole matches the first flange 71. The internal splines are in fit connection with the external splines; and the third connecting hole matches the third flange 73. The fit connection of flange plus spline plus flange is formed integrally. The flanges at both ends of the external splines are configured to carry the radial load; and the torque is transmitted in combination with the internal and external splines to functionally separate radial load from torque transmission, thereby improving the structural reliability of the gauge-changing wheelset.

Specifically, an end of the inner sleeve 4 connected with the wheels 6 is configured as an externally enlarged stepped hole. The inner diameter of a wide section of the stepped hole is adapted to the outer diameter of the intermediate section of the stepped shaft; and the inner diameter of a narrow section of the stepped hole is adapted to the inner diameter of both ends of the stepped shaft, such that when the gauge is changed, as the inner sleeve 4 (narrow section of the stepped hole) moves relative to the axle 7. The wide section of the stepped hole can be sleeved on the intermediate section of the stepped shaft. The distance between the inner step surface of the wide section of the stepped hole and a shaft shoulder of the stepped shaft is the gauge change interval. When the inner step surface of the wide section of the stepped hole fits the shoulder of the stepped shaft, both reach the maximum limit distance, that is, the maximum distance of the gauge change.

In order to laterally position the axle 7, both ends of the axle 7 are respectively connected to the axle-box body through positioning bearings to prevent the axle 7 from moving laterally relative to the axle-box body. The positioning bearings may be deep groove ball bearings; the interior side of the wheel 6 and the axle 7 are connected by a soft seal to prevent dust and debris from entering the interior side of the wheel 6, the structure of the soft seal is set so as not to affect the movement of the wheel 6.

Further, an interior side of the axle-box body is opened to facilitate the sliding of the sliding unit along the axle-box body. An exterior side thereof is further provided with a detachable outer end cover; and the outer end cover and the axle 7 are connected by the positioning bearing to laterally position the axle 7 relative to the axle-box body.

Specifically, in the present embodiment, as shown in FIG. 3, the locking pin 2 comprises a pin body 21, one side of which is provided with an open groove 22 penetrating along the radial direction of the pin body 21. The open groove 22 is provided with at least one lug 23 extending axially along the pin body 21. An upper end of the lug 23 is connected with a groove top of the open groove 22. A notch 24 is reserved between a lower end of the lug 23 and a groove bottom of the open groove 22, and the lug 23 is inserted into the flute 12. In an embodiment of the present invention, preferably, two parallel said lugs 23 extending axially along the pin body 21 are provided in the open groove 22. The distance between the two lugs 23 is the same as the distance between two adjacent flutes 12; disposing two lugs 23 helps to improve the forces on individual lugs 23 and enhance the reliability of locking and unlocking. When the gauge is changed, the locking pins 2 are disengaged from the flutes 12 upwards under the action of a vertical upward external force, first, the lug 23 is disengaged from the flutes 12 upwardly, and moves to a position above the flutes 12, and then the notch 24 under the lug 23 is opposite to the boss 11 between the two flutes 12. When an external force is applied to the left or right, the outer sleeve 1 moves along with the wheel 6, and the boss 11 is locked into the notch 24 and moves along the notch 24. The lower end of the lug 23 is supported on the boss surface of the boss 11 until it moves to the position of another flute 12. Then, the pin body 21 moves downwards under the action of its own gravity and the downward force; and the lug 23 is inserted into the flute 12, so that the locking is achieved and the gauge is changed completely.

In an embodiment of the present invention, the width of the lug 23 matches the width of the flute 12, so that the lug 23 can be inserted into or disengaged from the flute 12. It is ensured that the stable position of the entire locking mechanism after the lug 23 is inserted into the flute 12 so as to avoid any shaking. The width of the notch 24 is greater than or equal to the thickness of the boss 11, so that the boss 11 can be locked into the notch 24 and can slide therein.

In an embodiment of the present invention, in order to ensure that the part of the pin body 21 inserted into the axle-box body fits well with the axle-box body, the concave arc surface matches an outer surface on the opposite side of the pin body 21 having the open groove 22.

In an embodiment of the present invention, a bottom surface of the pin body 21 is respectively provided as an upward-sloping guide slant 25 on both sides of the central axis. In order to provide upward force to the pin body 21, guide tracks with the same inclination as the guide slants 25 can be provided on the ground. When the guide slants 25 of the locking pins 2 move slantwise upwardly along the guide tracks, an upward force is provided for the locking pin to facilitate unlocking.

In an embodiment of the present invention, the pin body 21 is mounted in the axle-box body through a return spring 5. Specifically, a support base can be disposed in the axle-box body. An upper end of the pin body 21 is connected with the return spring 5. An upper end of the return spring 5 is connected with the support base. The return spring 5 is configured to ensure that the pin body 21 has a locking force after being locked to keep it in a locked state, and provides a reverse force for the pin body 21 when it is locked again after being unlocked, which facilitates quick locking. The bottom surface of the axle-box body is provided with a through hole of which the diameter is slightly larger than that of the pin body 21. The lower end of the pin body 21 extends beyond the bottom surface of the axle-box body via the through hole, so that gauge-changing ground facility can exert a force on the pin body 21 to change the gauges.

According to the embodiments above, in the present invention, the locking mechanisms are respectively provided on the exterior sides of the wheels 6. A part of the axle 7 between the interior sides of the wheels 6 is consistent with the traditional axle 7. Thus, on the one hand, there is enough space available for the motor, gearbox and other components mounted on the axle 7 between the inner sides of the wheels 6. On the other hand, the interface of the gauge-changing wheelset can be consistent with that of existing vehicles, which is convenient for batch modification of the existing vehicles. In addition, the wheels 6 and the axle 7 are connected through splines, thereby the torque is evenly distributed on the inner circumferences of the wheels 6, which facilitates not only the transmission of torque, but also the sliding of the wheels 6 along the axle 7 to change gauges; and the reliability of the gauge-changing wheelset is enhanced.

Moreover, the locking mechanism of the embodiment of the present invention is simple in structure and convenient to operate, and can provide reliable locking and unlocking, so as to change train gauge conveniently and reliably.

The descriptions above are only preferred embodiments of the present invention and are not intended to limit the present invention.

## Claims

1. A gauge-changing wheelset, comprising:
an axle (7),
wheels (6), being provided at both ends of the axle (7), respectively and connected to the axle (7) through splines, and
locking mechanisms being respectively provided on exterior sides of the wheels (6) and located in an axle-box body at both ends of the axle (7) and connected to the wheels (6) for locking and unlocking the wheels (6), so as to change gauges of the wheels (6); each of the locking mechanism comprises an outer sleeve (1) and locking pins (2);
opposite sides outside the outer sleeve (1) are provided with bosses (11) axially extending along the outer sleeve (1), and a plurality of flutes (12) are disposed at intervals along the length direction of the bosses (11); the outer sleeve (1) is in clearance fit with an inner surface of the axle-box body, and an inner wall of the axle-box body is provided with concave arc surfaces corresponding to the flutes (12) respectively; the locking pins (2) are inserted into locking spaces defined by the flutes (12) and the concave arc surfaces, and are switchable between a plurality of the locking spaces under the action of an external force, so as to change the gauges of the wheels (6);
**characterized in that**
each of the locking pins (2) includes a pin body (21), one side of which is provided with an open groove (22) penetrating along the radial direction of the pin body (21); the open groove (22) is provided with at least one lug (23) extending along the axial direction of the pin body (21), an upper end of the lug (23) is connected with a groove top of the open groove (22), a notch (24) is reserved between a lower end of the lug (23) and a groove bottom of the open groove, and the lug (23) is inserted into the flute (12).

2. The gauge-changing wheelset of claim 1, **characterized in that**, the locking mechanism further comprises an inner sleeve (4) and a rolling bearing (3); the inner sleeve (4), the rolling bearing (3), and the outer sleeve (1) are tightly sleeved in sequence from inside to outside, the inner sleeve (4) is in clearance fit with the axle (7), and an end of the inner sleeve (4) facing each of the wheels (6) extends beyond the axle-box body and is firmly connected to each of the wheels (6).

3. The gauge-changing wheelset of claim 2, **characterized in that**, the axle (7) is configured as a stepped shaft having a diameter in the middle part greater than a diameter at both ends, the wheels (6) are disposed on an intermediate section of the stepped shaft and are respectively arranged at both ends of the intermediate section, and the locking mechanisms are arranged on both ends of the stepped shaft.

4. The gauge-changing wheelset of claim 3, **characterized in that**, an inner circumference of each of the wheels (6) is provided with internal splines, both ends of the intermediate section of the stepped shaft are provided with external splines, and the wheels and both ends of the intermediate section are in fit connection with the internal splines and the external splines.

5. The gauge-changing wheelset of claim 4, **characterized in that**, the two ends of the intermediate section are configured as a three-stage stepped shaft comprising a first flange (71), a second flange (72), and a third flange (73) of which the diameters are gradually increased from outside to inside, and the external splines are provided on an external circumference of the second flange (72); a center hole of the wheel is configured as a three-stage stepped hole including a first connecting hole, a second connecting hole, and a third connecting hole of which the diameters are gradually increased from outside to inside; the internal splines are circumferentially disposed on an inner wall of the second connecting hole, the first connecting hole matches the first flange (71), the internal splines are in fit connection with the external splines, and the third connecting hole matches the third flange (73).

6. The gauge-changing wheelset of claim 3, **characterized in that**, the inner sleeve (4) is sleeved on both ends of the stepped shaft, and a gauge change interval is reserved between the inner sleeve and a shaft shoulder of the stepped shaft; and the distance between two adjacent flutes is equal to half of the gauge to be changed.

7. The gauge-changing wheelset of claim 6, **characterized in that**, an end of the inner sleeve (4) connected with each of the wheels (6) is configured as an externally enlarged stepped hole, the inner diameter of a wide section of the stepped hole is matched with the outer diameter of the intermediate section of the stepped shaft, and the inner diameter of a narrow section of the stepped hole is matched with the inner diameter of both ends of the stepped shaft.

8. The gauge-changing wheelset of any one of claims 1-7, **characterized in that**, both ends of the axle (7) are respectively connected to the axle-box bodies through positioning bearings; an interior side of each of the wheels (6) and the axle (7) are connected by a soft seal.

9. The gauge-changing wheelset of claim 8, **characterized in that**, an interior side of the axle-box body is opened, and an exterior side of the axle-box body is provided with a detachable outer end cover; the outer end cover and the axle (7) are connected by the positioning bearings; each of the positioning bearings being disposed at both ends of the axle (7) and connected with the outer end cover of the axle-box body.

10. The gauge-changing wheelset of claim 1, **characterized in that**, the concave arc surface matches an outer surface on the opposite side of the pin body (21) having the open groove (22).

11. The gauge-changing wheelset of claim 1, **characterized in that**, a bottom surface of the pin body (21) is respectively provided as an upward-sloping guide slant (25) on both sides of the central axis.

12. The gauge-changing wheelset of claim 1, **characterized in that**, the pin body (21) is mounted in the axle-box body through a return spring (5); an upper end of the pin body (21) is connected with the return spring (5), and a lower end of the pin body (21) extends beyond a bottom surface of the axle-box body.

13. The gauge-changing wheelset of claim 1, **characterized in that**, two parallel lugs (23) extending axially along the pin body (21) are provided in the open groove (22).

## Patentansprüche

1. Spurwechselradsatz, aufweisend:
eine Achse (7),
Räder (6), die jeweils an beiden Enden der Achse (7) vorgesehen und mit der Achse (7) über Keilnuten verbunden sind, und Verriegelungsmechanismen, die jeweils an den Außenseiten der Räder (6) vorgesehen und in einem Achsenkörper an beiden Enden der Achse (7) angeordnet und mit den Rädern (6) verbunden sind, um die Räder (6) zu verriegeln und zu entriegeln, um so die Spurweite der Räder (6) zu ändern;
wobei jeder der Verriegelungsmechanismen eine äußere Hülse (1) und Verriegelungsstifte (2) aufweist; wobei
gegenüberliegende Seiten außerhalb der äußeren Hülse (1) mit Vorsprüngen (11) versehen sind, die sich axial entlang der äußeren Hülse (1) erstrecken, und eine Vielzahl von Nuten (12) in Abständen entlang der Längsrichtung der Vorsprünge (11) angeordnet sind; die äußere Hülse (1) in Spielpassung mit einer Innenfläche des Achslagerkörpers ist, und eine Innenwand des Achslagerkörpers mit konkaven Bogenflächen versehen ist, die jeweils den Nuten (12) entsprechen; die Verriegelungsstifte (2) in Verriegelungsräume eingesetzt sind, die durch die Nuten (12) und die konkaven Bogenflächen definiert sind, und unter der Wirkung einer äußeren Kraft zwischen einer Mehrzahl der Verriegelungsräume umschaltbar sind, um die Spurweiten der Räder (6) zu ändern,
**dadurch gekennzeichnet, dass**
jeder der Verriegelungsstifte (2) einen Stiftkörper (21) aufweist, dessen eine Seite mit einer offenen Nut (22) versehen ist, die entlang der radialen Richtung des Stiftkörpers (21) durchdringt; die offene Nut (22) mit mindestens einem Ansatz (23) versehen ist, der sich entlang der axialen Richtung des Stiftkörpers (21) erstreckt, ein oberes Ende des Ansatzes (23) mit einer Nutoberseite der offenen Nut (22) verbunden ist, eine Kerbe (24) zwischen einem unteren Ende des Ansatzes (23) und einem Nutboden der offenen Nut vorgesehen ist, und der Ansatz (23) in die Nut (12) eingesetzt ist.

2. Spurwechselradsatz nach Anspruch 1, **dadurch gekennzeichnet, dass** der Verriegelungsmechanismus ferner eine innere Hülse (4) und ein Wälzlager (3) aufweist; die innere Hülse (4), das Wälzlager (3) und die äußere Hülse (1) nacheinander von innen nach außen dicht ummantelt sind, die innere Hülse (4) sich in Spielpassung mit der Achse (7) befindet, und ein Ende der inneren Hülse (4), das jedem der Räder (6) zugewandt ist, sich über den Achslagerkörper hinaus erstreckt und fest mit jedem der Räder (6) verbunden ist.

3. Spurwechselradsatz nach Anspruch 2, **dadurch gekennzeichnet, dass** die Achse (7) als Stufenwelle ausgebildet ist, deren Durchmesser im mittleren Teil größer ist als der Durchmesser an beiden Enden, die Räder (6) auf einem Zwischenabschnitt der Stufenwelle angeordnet sind und jeweils an beiden Enden des Zwischenabschnitts angeordnet sind, und die Verriegelungsmechanismen an beiden Enden der Stufenwelle angeordnet sind.

4. Spurwechselradsatz nach Anspruch 3, **dadurch gekennzeichnet, dass** ein Innenumfang jedes der Räder (6) mit einer Innenverzahnung versehen ist, beide Enden des Zwischenabschnitts der Stufenwelle mit einer Außenverzahnung versehen sind und die Räder und beide Enden des Zwischenabschnitts in Passverbindung mit der Innenverzahnung und der Außenverzahnung stehen.

5. Spurwechselradsatz nach Anspruch 4, **dadurch gekennzeichnet, dass** die beiden Enden des Zwischenabschnitts als dreistufige Stufenwelle ausgebildet sind, die einen ersten Flansch (71), einen zweiten Flansch (72) und einen dritten Flansch (73) aufweist, deren Durchmesser von außen nach innen allmählich zunehmen, und dass die Außenverzahnung an einem Außenumfang des zweiten Flansches (72) vorgesehen ist; ein Mittelloch des Rades als dreistufiges Stufenloch konfiguriert ist, das ein erstes Verbindungsloch, ein zweites Verbindungsloch und ein drittes Verbindungsloch aufweist, deren Durchmesser von außen nach innen allmählich zunehmen; die Innenverzahnungen in Umfangsrichtung an einer Innenwand des zweiten Verbindungslochs angeordnet sind, das erste Verbindungsloch mit dem ersten Flansch (71) übereinstimmt, die Innenverzahnungen in Passverbindung mit den Außenverzahnungen stehen und das dritte Verbindungsloch mit dem dritten Flansch (73) übereinstimmt.

6. Spurwechselradsatz nach Anspruch 3, **dadurch gekennzeichnet, dass** die innere Hülse (4) an beiden Enden der abgestuften Welle mit einer Hülse versehen ist, und dass zwischen der Innenhülse und einer Wellenschulter der abgestuften Welle ein Intervall zum Wechseln der Spurweite vorgesehen ist; und dass der Abstand zwischen zwei benachbarten Nuten gleich der Hälfte der zu wechselnden Spurweite ist.

7. Spurwechselradsatz nach Anspruch 6, **dadurch gekennzeichnet, dass** ein Ende der innere Hülse (4), das mit jedem der Räder (6) verbunden ist, als ein nach außen vergrößertes Stufenloch ausgebildet ist, der Innendurchmesser eines breiten Abschnitts des Stufenlochs an den Außendurchmesser des Zwischenabschnitts der Stufenwelle angepasst ist, und der Innendurchmesser eines schmalen Abschnitts des Stufenlochs an den Innendurchmesser beider Enden der Stufenwelle angepasst ist.

8. Spurwechselradsatz nach einem der Ansprüche 1 bis 7, **dadurch gekennzeichnet, dass** beide Enden der Achse (7) jeweils mit den Achslagergehäusen durch Positionslager verbunden sind; eine Innenseite jedes der Räder (6) und der Achse (7) durch eine Weichdichtung verbunden sind.

9. Spurwechselradsatz nach Anspruch 8, **dadurch gekennzeichnet, dass** eine Innenseite des Achslagergehäuses geöffnet ist und eine Außenseite des Achslagergehäuses mit einer abnehmbaren äußeren Endabdeckung versehen ist; die äußere Endabdeckung und die Achse (7) durch die Positionierungslager verbunden sind; jedes der Positionierungslager an beiden Enden der Achse (7) angeordnet und mit der äußeren Endabdeckung des Achslagergehäuses verbunden ist.

10. Spurwechselradsatz nach Anspruch 1, **dadurch gekennzeichnet, dass** die konkave Bogenfläche mit einer Außenfläche auf der gegenüberliegenden Seite des Stiftkörpers (21) mit der offenen Nut (22) übereinstimmt.

11. Spurwechselradsatz nach Anspruch 1, **dadurch gekennzeichnet, dass** eine Unterseite des Stiftkörpers (21) auf beiden Seiten der Mittelachse jeweils als nach oben geneigte Führungsschräge (25) ausgebildet ist.

12. Spurwechselradsatz nach Anspruch 1, **dadurch gekennzeichnet, dass** der Stiftkörper (21) über eine Rückstellfeder (5) im Radsatzlagergehäuse gelagert ist, ein oberes Ende des Stiftkörpers (21) mit der Rückstellfeder (5) verbunden ist und ein unteres Ende des Stiftkörpers (21) über eine Bodenfläche des Radsatzlagergehäuses hinausragt.

13. Spurwechselradsatz nach Anspruch 1, **dadurch gekennzeichnet, dass** in der offenen Nut (22) zwei parallele Ansätze (23) vorgesehen sind, die sich axial entlang des Stiftkörpers (21) erstrecken.

## Revendications

1. Essieu monté à écartement variable, comprenant :
un essieu (7),
des roues (6) étant respectivement prévues aux deux extrémités de l'essieu (7), et connectées à l'essieu (7) au moyen de cannelures, et
des mécanismes de verrouillage étant respectivement prévus sur les côtés extérieurs des roues (6) et situés dans un corps de boîte d'essieu aux deux extrémités de l'essieu (7) et connectés aux roues (6) pour verrouiller et déverrouiller les roues (6), de manière à changer les écartements des roues (6) ; chacun des mécanismes de verrouillage comprend un manchon extérieur (1) et des broches de verrouillage (2) ;
des côtés opposés à l'extérieur du manchon extérieur (1) sont pourvus de bossages (11) s'étendant axialement le long du manchon extérieur (1), et une pluralité de cannelures (12) sont disposées à des intervalles le long de la direction de la longueur des bossages (11) ; le manchon extérieur (1) est en ajustement avec jeu avec une surface intérieure du corps de boîte d'essieu, et une paroi intérieure du corps de boîte d'essieu est pourvue de surfaces en arc concaves correspondant aux cannelures (12), respectivement ; les broches de verrouillage (2) sont insérées dans des espaces de verrouillage définis par les cannelures (12) et les surfaces en arc concaves, et sont commutables entre une pluralité des espaces de verrouillage sous l'action d'une force extérieure, de manière à changer les écartements des roues (6) ;
**caractérisé en ce que**
chacune des broches de verrouillage (2) comprend un corps de broche (21), dont un côté est pourvu d'une rainure ouverte (22) pénétrant le long de la direction radiale du corps de broche (21) ; la rainure ouverte (22) est pourvue d'au moins une patte (23) s'étendant le long de la direction axiale du corps de broche (21), une extrémité supérieure de la patte (23) est connectée à un sommet de rainure de la rainure ouverte (22), une encoche (24) est réservée entre une extrémité inférieure de la patte (23) et un fond de rainure de la rainure ouverte, et la patte (23) est insérée dans la cannelure (12).

2. Essieu monté à écartement variable selon la revendication 1, **caractérisé en ce que** le mécanisme de verrouillage comprend en outre un manchon intérieur (4) et un palier à roulement (3) ; le manchon intérieur (4), le palier à roulement (3), et le manchon extérieur (1) sont étroitement manchonnés en séquence de l'intérieur vers l'extérieur, le manchon intérieur (4) est en ajustement avec jeu avec l'essieu (7), et une extrémité du manchon intérieur (4) faisant face à chacune des roues (6) s'étend au-delà du corps de boîte d'essieu et est connectée fermement à chacune des roues (6).

3. Essieu monté à écartement variable selon la revendication 2, **caractérisé en ce que** l'essieu (7) est configuré sous la forme d'un arbre étagé présentant un diamètre dans la partie médiane supérieur à un diamètre aux deux extrémités, les roues (6) sont disposées sur une section intermédiaire de l'arbre étagé et sont respectivement agencées aux deux extrémités de la section intermédiaire, et les mécanismes de verrouillage sont agencés aux deux extrémités de l'arbre étagé.

4. Essieu monté à écartement variable selon la revendication 3, **caractérisé en ce qu'**une circonférence intérieure de chacune des roues (6) est pourvue de cannelures internes, les deux extrémités de la section intermédiaire de l'arbre étagé sont pourvues de cannelures externes, et les roues et les deux extrémités de la section intermédiaire sont en connexion ajustée avec les cannelures internes et les cannelures externes.

5. Essieu monté à écartement variable selon la revendication 4, **caractérisé en ce que** les deux extrémités de la section intermédiaire sont configurées sous la forme d'un arbre étagé à trois étages comprenant une première bride (71), une deuxième bride (72) et une troisième bride (73) dont les diamètres sont progressivement augmentés de l'extérieur vers l'intérieur et les cannelures externes sont prévues sur une circonférence externe de la deuxième bride (72) ; un trou central de la roue est configuré sous la forme d'un trou étagé à trois étages comprenant un premier trou de connexion, un deuxième trou de connexion et un troisième trou de connexion dont les diamètres sont progressivement augmentés de l'extérieur vers l'intérieur ; les cannelures internes sont disposées circonférentiellement sur une paroi interne du deuxième trou de connexion, le premier trou de connexion correspond à la première bride (71), les cannelures internes sont en connexion ajustée avec les cannelures externes et le troisième trou de connexion correspond à la troisième bride (73).

6. Essieu monté à écartement variable selon la revendication 3, **caractérisé en ce que** le manchon intérieur (4) est manchonné aux deux extrémités de l'arbre étagé, et un intervalle de changement d'écartement est réservé entre le manchon intérieur et un épaulement d'arbre de l'arbre étagé ; et la distance entre deux cannelures adjacentes est égale à la moitié de l'écartement à changer.

7. Essieu monté à écartement variable selon la revendication 6, **caractérisé en ce qu'**une extrémité du manchon intérieur (4) connectée à chacune des roues (6) est configurée sous la forme d'un trou étagé agrandi extérieurement, le diamètre intérieur d'une section large du trou étagé est apparié au diamètre extérieur de la section intermédiaire de l'arbre étagé, et le diamètre intérieur d'une section étroite du trou étagé est adapté au diamètre intérieur des deux extrémités de l'arbre étagé.

8. Essieu monté à écartement variable selon l'une quelconque des revendications 1-7, **caractérisé en ce que** les deux extrémités de l'essieu (7) sont respectivement connectés aux corps de boîte d'essieu par des paliers de positionnement ; un côté intérieur de chacune des roues (6) et l'essieu (7) sont connectés par un joint souple.

9. Essieu monté à écartement variable selon la revendication 8, **caractérisé en ce qu'**un côté intérieur du corps de boîte d'essieu est ouvert, et un côté extérieur du corps de boîte d'essieu est pourvu d'un couvercle d'extrémité extérieur amovible ; le couvercle d'extrémité extérieur et l'essieu (7) sont connectés par les paliers de positionnement ; chacun des paliers de positionnement étant disposé aux deux extrémités de l'essieu (7) et connecté au couvercle d'extrémité extérieur du corps de boîte d'essieu.

10. Essieu monté à écartement variable selon la revendication 1, **caractérisé en ce que** la surface en arc concave s'apparie à une surface extérieure sur le côté opposé du corps de broche (21) présentant la rainure ouverte (22).

11. Essieu monté à écartement variable selon la revendication 1, **caractérisé en ce qu'**une surface inférieure du corps de broche (21) est respectivement prévue en tant qu'inclinaison de guidage en pente vers le haut (25) des deux côtés de l'axe central.

12. Essieu à écartement variable selon la revendication 1, **caractérisé en ce que** le corps de broche (21) est monté dans le corps de boîte d'essieu par l'intermédiaire d'un ressort de rappel (5) ; une extrémité supérieure du corps de broche (21) est connectée au ressort de rappel (5), et une extrémité inférieure du corps de broche (21) s'étend au-delà d'une surface inférieure du corps de boîte d'essieu.

13. Essieu à écartement variable selon la revendication 1, **caractérisé en ce que** deux pattes parallèles (23) s'étendant axialement le long du corps de broche (21) sont prévues dans la rainure ouverte (22).
